# EUROPEAN PATENT SPECIFICATION

(11) **EP 4 443 405 B1**
(45) Date of publication and mention of the grant of the patent: **30.09.2026**
(21) Application number: 24164667.8
(22) Date of filing: 19.03.2024
(51) Int. Cl.: G08B 17/10, G08B 17/113, G08B 29/14

(54) **A TRIM ELEMENT FOR A FIRE DETECTION SYSTEM AND A METHOD THEREOF**
VERKLEIDUNGSELEMENT FÜR EIN BRANDMELDESYSTEM UND VERFAHREN DAFÜR
ÉLÉMENT DE GARNITURE POUR SYSTÈME DE DÉTECTION D'INCENDIE ET PROCÉDÉ ASSOCIÉ

(30) Priority: 03.04.2023 US 202363493862 P
(43) Date of publication of application: 09.10.2024
(73) Proprietor: Carrier Corporation, Palm Beach Gardens, FL 33418 (US)
(72) Inventor: GADONNIEX, Dennis, Bradenton, 34202 (US); PATEL, Vipul, Bradenton, 34202 (US)
(74) Representative: Dehns

(56) References cited:
- EP-A1- 3 359 303
- US-A1- 2020 250 963
- US-A1- 2022 058 939
- US-A1- 2022 366 778

## Description

### FIELD OF THE INVENTION

**The** disclosure generally relates to smoke detectors having self-testing capabilities. More particularly, the disclosure relates to a trim element for a smoke detector to accommodate an aerosolizing chamber for self-testing the smoke detector.

### BACKGROUND

Fire detection systems generally include smoke detectors to identify smoke or particulate matter within a confined space. Periodic inspection is desirable to ensure that the smoke detector is calibrated and effective in identifying a fire or unusually high levels of smoke particulate matter. Accordingly, the smoke detectors are usually subjected to a functional test at regular intervals during which a test gas is generated and discharged to simulate smoke produced during a fire around the smoke detector. However, current testing methods may have some shortcomings.
EP 3359303 A1 discloses a fire detect testing device for installation with, or retrofitting to, a fire detector. The testing device includes an aerosol generator in fluid connection with a liquid reservoir which directs an aerosol towards a detector element of the fire detector in order to test whether smoke entry has been compromised. The liquid reservoir of the testing device may be installed within a base of the detector, between the base and the detector, or in the detector itself.

### SUMMARY

According to a first aspect, the invention provides a trim element for covering a base portion of a smoke detector, the trim element comprising: at least one aerosolizing chamber; and a hollow housing comprising an inner wall adapted to removably attach the hollow housing to the base portion of the smoke detector, the hollow housing defining the at least one aerosolizing chamber and at least one outlet in fluid communication with the at least one aerosolizing chamber, wherein the at least one aerosolizing chamber comprises: at least one aerosol generator to generate an aerosol; at least one airflow generating element configured to generate and to direct airflow in combination with the generated aerosol towards the at least one outlet; and at least one processor electrically coupled to the at least one aerosol generator and the at least one airflow generating element, the at least one processor configured to: receive an input signal indicative of an inspection mode of the smoke detector; and transmit an activation signal to the at least one aerosol generator and the at least one airflow generating element in response to receiving the input signal.

Optionally, the hollow housing is a frustoconical-shaped ring comprising the at least one outlet proximal the inner wall, such that the at least one outlet is directed towards the smoke detector.

Optionally, the trim element further includes at least one flow directing element adapted to define the at least one outlet at a first end, such that the flow directing element is in fluid communication with the at least one aerosolizing chamber at a second end.

Optionally, the at least one flow directing element of the trim element is an airflow scoop.

Optionally, the trim element further includes a flow directing element on a peripheral surface of the hollow housing. Optionally, the flow directing element is adapted to define at least one outlet.

Optionally, the at least one processor is configured to regulate a speed of the airflow generating element to selectively direct the airflow in combination with the generated aerosol through at least one outlet of the flow directing element.

Optionally, the at least one aerosol generator includes a liquid storage chamber and an actuator. The liquid storage chamber stores a liquid. The actuator is operably engaged with the liquid storage chamber and adapted to aerosolize the liquid to form an aerosol.

Optionally, the liquid is one of an aerosol forming liquid and liquid containing dissolved salts.

Optionally, the smoke detector further comprises at least one of a heat sensor, a Carbon monoxide sensor, and a gas sensor for detecting at least one of an ambient temperature, a presence of a carbon monoxide gas, and a presence of a hazardous gas respectively. Optionally, the hazardous gas is at least one of an oxide of Carbon, an oxide of Sulphur, an oxide of Nitrogen, a Polycyclic Aromatic Hydrocarbon, and an aldehyde.

In another aspect there is provided a fire detection system comprising: at least one smoke detector comprising: a housing defining a photo detection chamber for receiving ambient particulate materials; and a trim element according to the first aspect of the invention as set out above for covering a base portion of the at least one smoke detector.

Optionally, the at least one outlet is directed towards the photo detection chamber such that the at least one outlet is adapted to transfer the generated aerosol into the photo detection chamber.

Optionally, the fire detection system further includes a control circuitry configured to transmit the input signal, during the inspection mode, to the at least one processor.

Optionally, the at least one smoke detector further includes a notification unit and a smoke detector controller. Optionally, the smoke detector controller is configured to determine if an amount of ambient particulate materials within the photo detection chamber is above a threshold level and generate a notification using the notification unit if the determined amount of ambient particulate materials is above the threshold level.

Optionally, the inspection mode is triggered based on the control circuitry receiving an input.

Optionally, the inspection mode is triggered periodically at predefined intervals.

Optionally, the notification is one of an audio notification, a visual notification, an audio-visual notification, and a haptic notification.

Optionally, the control circuitry is further configured to verify operational integrity of the at least one smoke detector based on the notification unit generating at least one of the audio notification, the visual notification, the audio-visual notification, and the haptic notification when the aerosol enters the photo detection chamber during the inspection mode.

Optionally, the control circuitry is further configured to generate a secondary notification on at least one of a computing device based on the control circuitry verifying operational integrity of the at least one smoke detector.

In another aspect, the invention provides a method for verifying operational integrity of a fire detection system comprising: providing the fire detection system comprising: at least one smoke detector; and a trim element for covering a base portion of the at least one smoke detector, wherein the trim element comprises at least one processor; transmitting an input signal, via a control circuitry during an inspection mode, to the at least one processor; receiving the input signal, via the at least one processor, during the inspection mode, from the control circuitry; transmitting an activation signal, via the at least one processor, to at least one aerosol generator to generate aerosol and to at least one airflow generating element to generate airflow and transfer the generated aerosol in combination with the generated airflow into a photo detection chamber via at least one outlet; determining, using a smoke detector controller, if an amount of ambient particulate matter within the photo detection chamber is above a threshold level; generating a notification, using a notification unit, if the determined amount of ambient particulate matter is above the threshold level; and verifying, via the control circuitry during the inspection mode, operational integrity of the fire detection system based on the notification unit generating at least one of an audio notification, a visual notification, an audio-visual notification, and a haptic notification.

The at least one smoke detector may include a housing defining a photo detection chamber for receiving ambient particulate matter. The trim element may include at least one aerosol generator. The trim element may include at least one airflow generating element. The at least one smoke detector may comprise a notification unit.

Optionally, the control circuitry is further configured to generate a secondary notification on at least one computing device based on the control circuitry verifying operational integrity of the at least one smoke detector. Optionally, the secondary notification is one of an audio notification, a visual notification, an audio-visual notification, and a haptic notification.

**To** further clarify the advantages and features of the method and system, a more particular description of the method and system will be rendered by reference to specific embodiments thereof, which is illustrated in the appended drawing. It is appreciated that these drawings depict typical embodiments of the disclosure and are therefore not to be considered limiting its scope. The disclosure will be described and explained with additional specificity and detail with the accompanying drawings.

### BRIEF DESCRIPTION OF THE DRAWINGS

These and other features, aspects, and advantages will become better understood when the following detailed description is read with reference to the accompanying drawings in which like characters represent like parts throughout the drawings. Certain exemplary embodiments will now be described in greater detail by way of example only and with reference to the accompanying drawings, in which:
**FIG. 1** exemplarily illustrates a partially exploded view of a smoke detector ;
**FIG. 2A** exemplarily illustrates a perspective view of the smoke detector with a trim element;
**FIG. 2B** exemplarily illustrates a perspective view of the smoke detector showing a cut-out portion of the trim element displaying an aerosolizing chamber;
**FIG. 2C** exemplarily illustrates a perspective view of the smoke detector showing the trim element having a flow directing element defined as an airflow scoop;
**FIG. 2D** exemplarily illustrates a top view of the smoke detector showing the trim element having three airflow scoops;
**FIG. 2E** exemplarily illustrates a side sectional view of the trim element of the smoke detector;
**FIG. 2F** exemplarily illustrates a side sectional view of the trim element of the smoke detector;
**FIG.** 3 exemplarily illustrates a block diagram showing an implementation of a fire detection system; and
**FIG. 4** exemplarily illustrates a flowchart indicating a method for verifying operational integrity of the fire detection system shown in **FIG.** 3.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the disclosure. Furthermore, in terms of the construction of the device, one or more components of the device may have been represented in the drawings by conventional symbols, and the drawings may show those specific details that are pertinent to understanding the embodiments of the disclosure so as not to obscure the drawings with details that will be readily apparent to those of ordinary skill in the art having the benefit of the description herein.

### DETAILED DESCRIPTION

It should be understood at the outset that although illustrative implementations of embodiments are illustrated below, systems and methods may be implemented using any number of techniques. The disclosure should in no way be limited to the illustrative implementations, drawings, and techniques illustrated below, including the exemplary design and implementation illustrated and described herein, but may be modified within the scope of the appended claims along with their full scope of equivalents.

**The** term "some" as used herein is defined as "one, or more than one, or all." Accordingly, the terms "one," "more than one," but not all" or "all" would all fall under the definition of "some." The term "some embodiments" may refer to one embodiment or several embodiments or all embodiments. Accordingly, the term "some embodiments" is defined as meaning "one embodiment, or more than one embodiment, or all embodiments."

**The** terminology and structure employed herein are for describing, teaching, and illuminating some embodiments and their specific features and elements and do not limit, restrict, or reduce the spirit and scope of the claims or their equivalents.

More specifically, any terms used herein such as but not limited to "includes," "comprises," "has," "have" and grammatical variants thereof do not specify an exact limitation or restriction and certainly do not exclude the possible addition of one or more features or elements, unless otherwise stated, and must not be taken to exclude the possible removal of one or more of the listed features and elements, unless otherwise stated with the limiting language "must comprise" or "needs to include."

**The** term "unit" used herein may imply a unit including, for example, one of hardware, software, and firmware or a combination of two or more of them. The "unit" may be interchangeably used with a term such as logic, a logical block, a component, a circuit, and the like. The "unit" may be a minimum system component for performing one or more functions or may be a part thereof.

Unless otherwise defined, all terms, and especially any technical and/or scientific terms, used herein may be taken to have the same meaning as commonly understood by one having ordinary skill in the art.

Embodiments will be described below in detail with reference to the accompanying drawings.

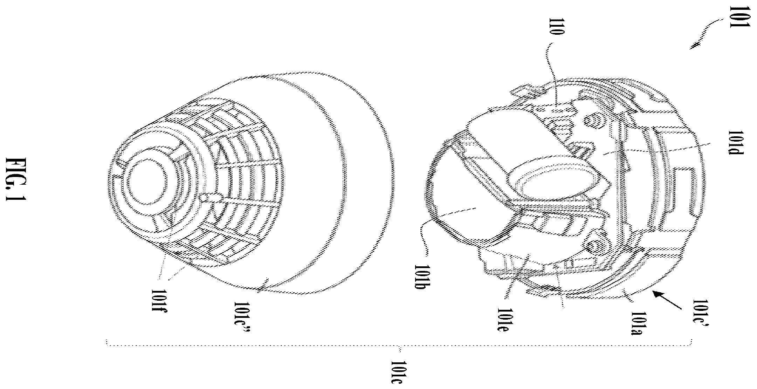

**FIG. 1** exemplarily illustrates a partially exploded view of a smoke detector 101 according to one or more embodiments of the disclosure. The smoke detector 101 may be a photoelectric smoke detector and interchangeably referred to as the photoelectric smoke detector 101 in one or more embodiments. For simplicity, the disclosure will focus on a photoelectric smoke detector 101. It is to be understood however, that the systems and methods described herein apply to any hazard detector (e.g., smoke, heat, CO, or other hazardous gases) using any type of detection (photoelectric, ionization, or other detection methods).

Typically, photoelectric smoke detectors 101 measure ambient smoke conditions of a confined space and activate an alarm in response to the presence of smoke. This may be accomplished by installing a chamber containing a light-emitting device ("emitter") and a light sensor ("sensor") positioned in proximity to measure the amount of light transmitted between them. The emitter and the sensor may be aligned such that their lines of sight are collinear. The presence of increasing amounts of smoke increases the attenuation of light passing between the emitter and the sensor. Whenever the amount of light striking the sensor drops below a minimum threshold, the system activates an alarm.

Alternatively, the emitter and sensor may also be positioned such that their lines of sight are offset at a sufficiently large angle. Such an arrangement ensures only a portion of the light propagating from the emitter directly strikes the sensor. The presence of increasing amounts of smoke increases the amount of light scattered toward and striking the sensor. Whenever the amount of light striking the sensor increases above a maximum threshold, the system activates an alarm. Since an optimally functioning smoke detector 101 employs several such components, periodic inspection is desirable to ensure that the smoke detector 101 is calibrated and effective in identifying a fire or unusually high levels of smoke particulate matter. Accordingly, the smoke detectors 101 may be subjected to a functional test at regular intervals during which a test gas is generated and discharged to simulate smoke produced during a fire around the smoke detector 101.

Smoke detectors 101 are generally installed in enclosed spaces or areas and designed to detect smoke or smoke particulate matter in the vicinity of the smoke detectors 101 and to report high levels of smoke particulate matter by an alarm signal. Typically, smoke detectors 101 may often be located where it is difficult or inconvenient to use conventional methods to test them. For example, the area in which a smoke detector 101 is placed might have restricted access (such as server rooms, R&D facilities, etc.), or testing of a smoke detector 101 might be disruptive (such as in a continuously occupied hospital ward), or the detector might be in a location which is hazardous to human health (such as certain areas of a nuclear power station), or the smoke detector 101 might be located in a position which is accessible with special equipment such as ladders, scaffolding or lifts. In such circumstances, smoke detectors 101 might not be tested as frequently as they should, or the cost of testing is very high. Existing smoke detector 101 systems also suffer from the disadvantage of manual adjustment of electrical components to carry out a calibration sequence. The present disclosure describes an improved smoke detector 101 having internal self-diagnostic capabilities thereby eliminating such drawbacks.

In some cases, smoke detectors 101 with self-testing capabilities may include aerosol generators within the smoke detector 101 body. The aerosol generators generate aerosol on demand to verify whether the smoke detector 101 is calibrated correctly, and functions as designed. However, in the event of a fire, the path followed by smoke to enter a detection chamber of the smoke detector 101 is different. For instance, smoke rises to the ceiling and surrounds the base portion of the smoke detector 101 before entering the detection chamber. As such, dirt or particulate matter blocking the entry path of the smoke would prevent the smoke detector 101 from detecting the smoke even though the photo detection chamber and associated electronics are in working condition. This disclosure describes an improved self-testing smoke detector 101, which correctly simulates and tests the flow and entry of smoke into the detection chamber to verify the operational integrity of the smoke detector 101.

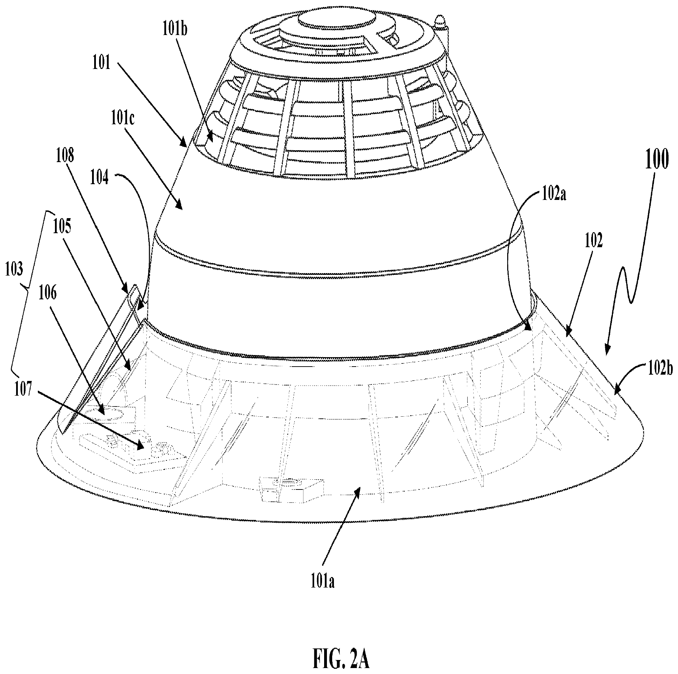

The smoke detector 101 includes a base portion 101a and a housing 101c defining a photo detection chamber 101b for receiving ambient particulate materials. In an embodiment, the smoke detector 101 includes at least one of a heat sensor, a Carbon monoxide sensor, and a gas sensor. The heat sensor may be adapted to detect an ambient temperature in the vicinity of the smoke detector 101. The Carbon monoxide sensor may be adapted to detect a presence of a carbon monoxide gas. Alternatively, the carbon monoxide sensor may be calibrated to generate a trigger signal if a quantity of the carbon monoxide gas exceeds a threshold level. Similarly, the gas sensor may detect a presence of a hazardous gas or may be calibrated to generate a trigger signal if a quantity of the hazardous gas exceeds a threshold level. In an embodiment, the hazardous gas is at least one of an oxide of Carbon, an oxide of Sulphur, an oxide of Nitrogen, a Polycyclic Aromatic Hydrocarbon, and an Aldehyde. The trim element 100, exemplarily illustrated in FIGS. 2A-2C, performs the function of covering the base portion 101a of the smoke detector 101. Moreover, the trim element 100 accommodates an on-demand aerosol generating mechanism for self-testing and verifying operational integrity of the smoke detector 101.

**As** shown, the smoke detector 101 includes a housing 101c having a first housing portion 101c', i.e., an upper portion and a second housing portion 101c", i.e., a lower portion. The second housing portion 101c" is permanently or removably connected to the first housing portion 101c'. When the first and second housing portions 101c', 101c" are assembled, the first and second housing portions 101c', 101c" together enclose sub-components used for operation of the smoke detector 101. As used herein, the terms "upper", "lower", and the like are in reference to the smoke detector 101 in use as it is mounted on a surface, for example a ceiling in a building. Therefore, the first housing portion 101c' is typically closer to the ceiling than the second housing portion 101c". As such, the second housing portion 101c" is typically the portion of the smoke detector 101 that faces downward toward a floor of the building. In some embodiments, smoke detector 101 may be mounted on a wall such that the first housing portion 101c' is closer to the wall than the second housing portion 101c". In such embodiments, the second housing portion 101c" is typically the portion of the smoke detector 101 that face toward the interior space of the room or space to be monitored.

The housing 101c defining the photo detection chamber 101b further comprises a base 101d and an optical cover 101e mounted to the base 101d. In an embodiment, the photo detection chamber 101b is defined between the base 101d and an interior surface of the optical cover 101e. In an embodiment, the base 101d or the interior surface of the optical cover 101e is made of a light absorbing material. In other embodiments, the base 101d and the interior surface of the optical cover 101e are made of light absorbing materials. The photo detection chamber 101b includes at least one light source adapted to emit light into the photo detection chamber 101b and at least one light sensing device adapted to receive light reflected from the ambient particulate materials in the photo detection chamber 101b. In an embodiment, the at least one light source is a single Light Emitting Diode (LED). However, alternate embodiments having a single light source, two light sources, or more than three light sources, are within the scope of the disclosure. The base 101d includes suitably positioned mounting portions for supporting the at least one light source. The light emitted by the at least one light source is scattered or reflected by the ambient particulate materials. The presence of increasing amounts of smoke increases the amount of light scattered in a direction toward and striking the at least one light sensing device. Whenever the amount of light striking the at least one light sensing device increases above a maximum threshold, the smoke detector 101 activates an alarm.

**As** shown in **FIG. 1****,** the second housing portion 101c" includes multiple inlets 101f through which ambient particulate materials may enter the smoke detector 101. In an embodiment, the inlets 101f are arranged in the second housing portion 101c" such that the ambient particulate materials flow along a fluid path leading to the interior of the photo detection chamber 101b. The photo detection chamber 101b is generally exposed to or in fluid communication with the area surrounding the smoke detector 101 and is thus allowing ingress of the ambient particulate materials through the inlets 101f. The ambient particulate materials may include air as well as smoke and non-smoke particles that are carried by the air. The photo detection chamber 101b also includes a smoke detector controller 110 which may be a printed circuit board (PCB) positioned between the base 101d and the first housing portion 101c' to mechanically support and electrically connect electronic components of the smoke detector 101.

In some embodiments, the smoke detector 101 may be hardwired to a power source (not shown) located within the building or area where the smoke detector 101 is mounted, remote from the smoke detector 101. In such embodiments, the smoke detector controller 110 may be directly or indirectly connected to a power source. In an embodiment, the smoke detector 101 may include a compartment for receiving one or more batteries sufficient to provide the power for operating the smoke detector 101 for an extended period. In an embodiment, the power provided by the batteries may be the sole source of power used to operate the smoke detector 101. However, in other embodiments, the battery power may be supplemental to the remote power source, for example in the event of a failure or loss of power at the power source.

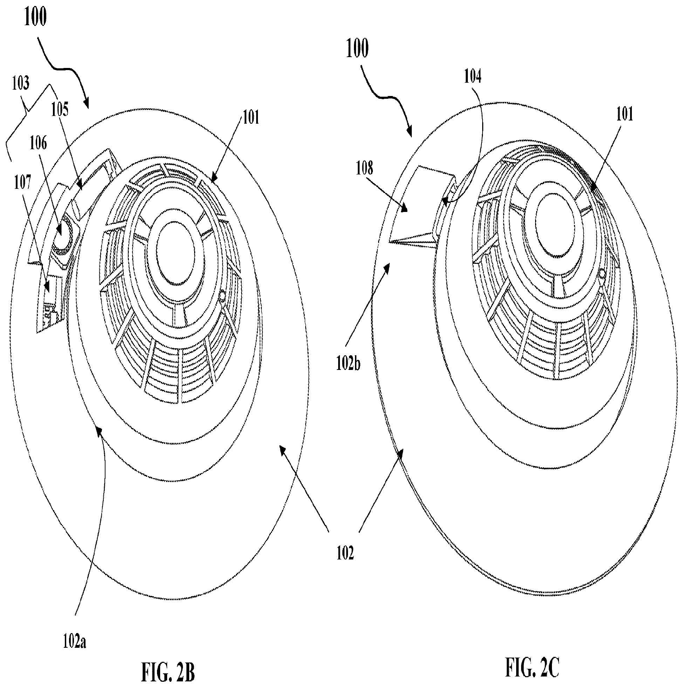

**FIG. 2A** exemplarily illustrates a perspective view of the smoke detector 101 with a trim element 100 according to one or more embodiments of the disclosure. **FIG. 2B** exemplarily illustrates a perspective view of the smoke detector 101 showing a cut-out portion of the trim element 100 displaying an aerosolizing chamber 103 according to one or more embodiments of the disclosure.

Referring to **FIGS. 2A-2B****,** the trim element 100 aesthetically covers the base portion 101a of the smoke detector 101 such that the base portion 101a is visible after removing the trim element 100. The trim element 100 includes a hollow housing 102 having an inner wall 102a adapted to removably attach the hollow housing 102 to the base portion 101a of the smoke detector 101. In an embodiment, the hollow housing 102 is a frustoconical-shaped ring including at least one outlet 104 proximal the inner wall 102a such that the at least one outlet 104 is directed towards the smoke detector 101. In other embodiments, the hollow housing 102 of the trim element 100 may be shaped as a frustum of a polygon, for example, an octagon, a hexagon, etc. The frustoconical-shaped ring or polygon profile of the hollow housing 102 inclines gradually to meet the ceiling thereby concealing or covering the base portion of the smoke detector 101. The trim element 100 may be provided in a kit along with the smoke detector 101 or provided as a separate component. As such, the trim element 100 may be designed in different colors and polygonal profiles. Several color combinations may be offered to suit the aesthetics of the building. The hollow housing 102 defines the at least one aerosolizing chamber 103 and the at least one outlet 104 in fluid communication with the at least one aerosolizing chamber 103. The at least one aerosolizing chamber 103 includes at least one aerosol generator 105 for generating an aerosol, at least one airflow generating element 106 for directing airflow in combination with the generated aerosol towards the at least one outlet 104, and at least one processor 107. In an embodiment according to the disclosure, the aerosol generator 105 may also refer to a heat generator or other conventional gas generator.

Referring to **FIGS. 2A-2B****,** the at least one aerosol generator 105 includes a liquid storage chamber for storing a liquid and an actuator operably engaged with the liquid storage chamber. The liquid is one of an aerosol forming liquid and a liquid containing dissolved salts. Alternatively, the liquid may include any liquid capable of forming an aerosol or an aerosol forming agent, for example, propylene glycol. The actuator is operably engaged with the liquid storage chamber and adapted to aerosolize the liquid to form an aerosol. The aerosol generator 105, disclosed herein, may utilize a piezoelectric transducer to aerosolize the liquid. Alternatively, different types of actuators may be envisioned. In an embodiment, the actuator may include a resistive heating element, an inductive heating element, a vibrating element, and the like. Vibrating elements may include, but are not limited to, ultrasonic mesh elements and vibrating mesh elements. The heating elements may include resistive wick, inductive wick, or capillary elements adapted to aerosolize the liquid.

Referring to **FIGS. 2A-2B****,** the at least one processor 107 is electrically coupled to the at least one aerosol generator 105 and the at least one airflow generating element 106. The at least one processor 107 is configured to receive an input signal indicative of an inspection mode of the smoke detector 101. Next, the processor 107 transmits an activation signal to the at least one aerosol generator 105 and the at least one airflow generating element 106 in response to receiving the input signal. Upon receiving the activation signal, the aerosol generator 105 generates aerosol and the at least one airflow generating element 106 which is a rotary fan rotates to generate airflow. The generated airflow in combination with the generated aerosol is directed towards the at least one outlet 104. In an embodiment, the at least one processor 107 is configured to regulate a speed of the airflow generating element 106 to selectively direct the airflow in combination with the generated aerosol through the at least one outlet 104. By regulating the speed of the airflow generating element 106, the density of particulate matter in the generated aerosol may also be controlled.

In an embodiment, the trim element 100 includes at least one flow directing element 108 adapted to define the at least one outlet 104 at a first end. The at least one flow directing element 108 is, for example, an airflow scoop in fluid communication with the at least one aerosolizing chamber 103 at a second end. The at least one outlet 104 is directed towards the photo detection chamber 101b shown in **FIG. 2A****,** such that the at least one outlet 104 is adapted to transfer the aerosol into the photo detection chamber 101b. Alternatively, the at least one outlet 104 may be defined as a part of a tube or vapor conduit directly entering the photo detection chamber 101b. Different types of valve mechanisms, for example, one-way valves and rotary valves, may also be used to selectively control a flow of the vapor released into the photo detection chamber 101b.

**FIG. 2C** exemplarily illustrates a perspective view of the smoke detector 101 showing the trim element 100 having the flow directing element 108 defined as an airflow scoop according to one or more embodiments of the disclosure. The trim element 100 also includes the at least one flow directing element 108, designed as an airflow scoop, adapted to define the at least one outlet 104 at the first end, such that the flow directing element 108 is in fluid communication with the at least one aerosolizing chamber 103 at the second end. In an embodiment, a plurality of flow directing elements 108 may be spaced apart relative to each other along a peripheral surface 102b of the hollow housing 102 such that each of the plurality of flow directing elements 108 are adapted to define the at least one outlet 104. In such an implementation, the at least one processor 107, shown in **FIG. 2A-2B****,** is configured to regulate a speed of the airflow generating element 106 to selectively direct the airflow in combination with the generated aerosol through the least one outlet 104 of the selected flow directing element 108 from among the plurality of flow directing elements 108. For example, when the speed is increased, the distance through which the airflow passes is substantially increased. This means, the generated aerosol and the generated airflow travels further away from the airflow generating element 106 and reaches the smoke detector 101 through the outlet 104 of the flow directing element 108 further away from the airflow generating element 106. Consequently, multiple entry points of the smoke detector 101 can be tested during the inspection mode.

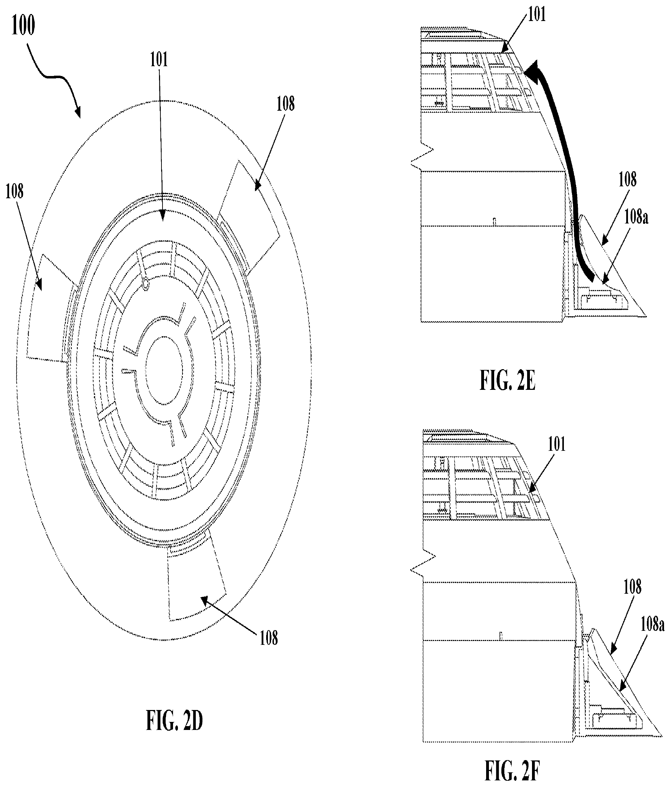

**FIG. 2D** exemplarily illustrates a top view of the smoke detector 101 showing the trim element 100 having three airflow scoops according to one or more embodiments of the disclosure. The flow directing elements 108 are defined as three airflow scoops and positioned at corners of an imaginary equilateral triangle. As such, the three airflow scoops are spaced equidistant relative to each other. By controlling the speed of the airflow generating element 106, shown in **FIG. 2B****,** the scoop through which the generated aerosol must be supplied may be selected. As such, the airflow in combination with the generated aerosol may be directed through the selected flow directing element 108 (airflow scoop) from among the three airflow scoops. Consequently, multiple entry points of the smoke detector 101 can be tested during the inspection mode.

**FIG. 2E** exemplarily illustrates a side sectional view of the trim element 100 of the smoke detector 101 according to one or more embodiments of the disclosure. The flow directing element 108 is defined as the airflow scoop. In an embodiment, an inner surface 108a of the flow directing element 108 is of an arcuate geometrical shape. The arcuate shape allows the generated aerosol to be directed towards the smoke detector 101 in a direction simulating flow of smoke during an actual fire event.

**FIG. 2F** exemplarily illustrates a side sectional view of the trim element 108 of the smoke detector 101 according to one or more embodiments of the disclosure. The flow directing element 108 is defined as the airflow scoop. In an embodiment, an inner surface 108a of the flow directing element 108 is of inclined relative to the ceiling. In an embodiment, the inner surface 108a is inclined at an angle between 15 degrees to 75 degrees. The inclined inner surface 108a allows the generated aerosol to be directed towards the smoke detector 101 in a direction simulating flow of smoke during an actual fire event.

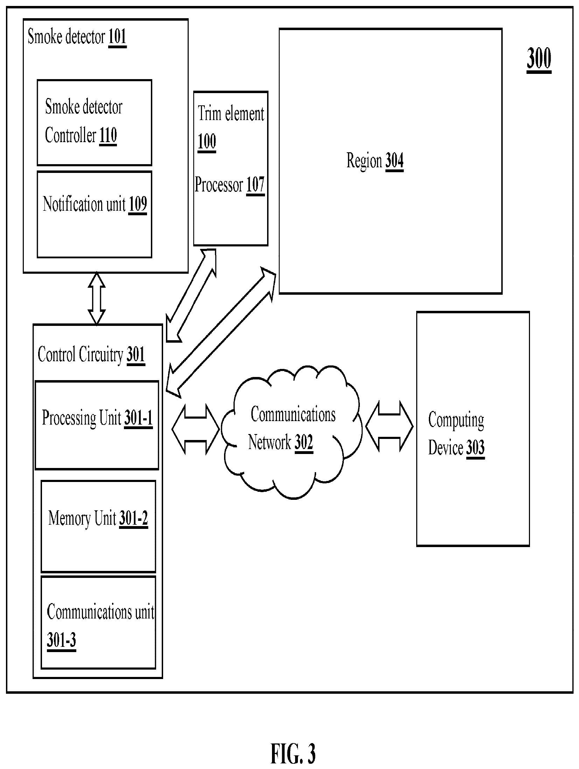

**FIG. 3** exemplarily illustrates a block diagram showing an implementation of a fire detection system 300 according to one or more embodiments of the disclosure. In an embodiment according to the disclosure, the fire detection system 300 includes the smoke detector 101 as disclosed in the detailed description of **FIGS. 1-2C** and control circuitry 301. The smoke detector 101 is arranged to detect smoke in a region 304. Moreover, the smoke detector 101 is configured to notify security personnel or a centralized fire panel of a building management system when the detected quantity of smoke within the region 304 is beyond a threshold level indicative of a fire event within the region 304. The region 304 may be a room, a hall, a lobby, etc., of a building.

As shown in **FIG. 3****,** the fire detection system 300 includes the at least one smoke detector 101, the trim element 100, and the control circuitry 301. As shown in **FIGS. 1-2B****,** the smoke detector 101 includes the housing 101c defining the photo detection chamber 101b for receiving ambient particulate materials. The trim element 100 aesthetically covers the base portion 101a of the at least one smoke detector 101. The trim element 100 includes the hollow housing 102 having the inner wall 102a adapted to removably attach the hollow housing 102 to the base portion 101a of the at least one smoke detector 101 as shown in **FIG.** 2A. The hollow housing 102 defines the at least one aerosolizing chamber 103 and the at least one outlet 104 in fluid communication with the at least one aerosolizing chamber 103 as shown in **FIG.** 2A. The at least one aerosolizing chamber 103 includes the at least one aerosol generator 105 for generating an aerosol, the at least one airflow generating element 106 for directing airflow in combination with the generated aerosol towards the at least one outlet 104, and the at least one processor 107. The at least one processor 107 is electrically coupled to the at least one aerosol generator 105 and the at least one airflow generating element 106. The at least one processor 107 receives the input signal indicative of an inspection mode of the smoke detector 101. Then, the processor 107 transmits the activation signal to the at least one aerosol generator 105 and the at least one airflow generating element 106 in response to receiving the input signal.

As used herein, the term "control circuitry 301", "the at least one processor 107" and "smoke detector controller 110" may be construed to encompass one or a combination of microprocessors, suitable logic, circuits, printed circuit boards (PCB), audio interfaces, visual interfaces, haptic interfaces, or the like. The control circuitry 301, the processor 107, and the smoke detector controller 110 may include, but are not limited to a microcontroller, a Reduced Instruction Set Computing (RISC) processor, an Application-Specific Integrated Circuit (ASIC) processor, a Complex Instruction Set Computing (CISC) processor, a central processing unit (CPU), a graphics processing unit (GPU), a state machine, and/or other processing units 301-1 or circuits. The control circuitry 301 may also comprise suitable logic, circuits, interfaces, and/or code that may be configured to execute a set of instructions stored in a memory unit 301-2. In an exemplary implementation, the memory unit 301-2 may include, but is not limited to, Electrically Erasable Programmable Read-only Memory (EEPROM), Random Access Memory (RAM), Read Only Memory (ROM), Hard Disk Drive (HDD), Flash memory, Solid-State Drive (SSD), and/or CPU cache memory. In an exemplary embodiment, the control circuitry 301 may be implemented in a centralized server of the centralized fire panel of the building management system. Moreover, the processor 107 and the smoke detector controller 110 may receive power from a suitably coupled power source. For example, the suitably coupled power source may be electrically coupled to the processor 107 and the smoke detector controller 110 for supplying electrical power. In an embodiment, the power source may be, for example, a battery, such as a rechargeable battery or a non-rechargeable battery. Examples of suitable batteries include, for example, a lithium battery (such as a lithium-ion battery), a nickel battery (such as a nickel-cadmium battery), and an alkaline battery.

Referring to **FIGS. 1-3****,** during the inspection mode, the at least one processor 107 is configured to receive the input signal from the control circuitry 301. Upon receiving the input signal, the processor 107 transmits an activation signal to the aerosol generator 105 to aerosolize the liquid to form an aerosol. The generated aerosol is transferred into the photo detection chamber 101b via the inlets 101f as shown in **FIG. 1****.** Next, the smoke detector controller 110 determines if an amount of ambient particulate materials within the photo detection chamber 101b is above the threshold level. The smoke detector controller 110 generates a notification using a notification unit 109 if the determined amount of ambient particulate materials is above the threshold level. As used herein, "threshold level" may be construed to refer to a maximum or minimum measured quantity (density, volume, etc.) of the ambient particulate materials beyond which the probability of a fire event within the region 304 is extremely high. The threshold level may be set by the manufacturer or may be adjusted or set by accessing the centralized fire panel of the building management system. As used herein, "inspection mode" is referred to a mode of the fire detection system 300 in which components of the fire detection system 300, such as the smoke detector 101, are tested. During these routine maintenance checks, faulty or malfunctioning smoke detectors 101 may be identified in a timely manner. In fire detection systems 300 implemented over large areas and multiple floors, the provision of the smoke detector 101 ensures quick and efficient inspection without manually dismantling or inspecting each single component.

In an embodiment, the inspection mode of the fire detection system 300 is triggered based on the control circuitry 301 receiving an input. For example, a security personnel monitoring a centralized fire panel of the building management system may conduct a random maintenance check by accessing the appropriate menu rendered on a user interface of the centralized fire panel. As a result, the selected smoke detector 101 is actuated and tested for operational malfunction/issues. Alternatively, the inspection mode is triggered periodically at predefined intervals. As used herein, "predefined intervals" refer to periodic intervals, such as weekly, monthly, yearly, and bi-weekly. The predefined interval may be stored in the memory unit 301-2 or may be adjusted by an operator using the control circuitry 301. In case the threshold levels are breached, the smoke detector controller 110 of a functioning smoke detector 101 actuates the notification unit 109 to generate a notification. In an embodiment, the notification is, for example, an audio notification, a visual notification, an audio-visual notification, and a haptic notification. As a result, the control circuitry 301 verifies the operational integrity of the at least one smoke detector 101 based on the notification unit 109 generating at least one of the audio notification, the visual notification, the audio-visual notification, and the haptic notification when the aerosol enters the photo detection chamber 101b during the inspection mode. As used herein, the term "operational integrity" refers to a normal functioning or intended state of functioning of the smoke detector 101 and/or the fire detection system 300 disclosed herein. With prolonged use, over the years, the individual components, such as the light sensing devices and light emitting diodes, are prone to wear or damage. This prevents the smoke detector 101 from functioning as intended or designed. Consequently, the operational integrity of the fire detection system 300 is compromised. Therefore, periodic inspection to ascertain the operational integrity or system readiness is desirable.

The control circuitry 301 further includes a communications unit 301-3 configured to communicate with the smoke detector controller 110, the at least one processor 107, and other components, such as sensors within the region 304 and a computing device 303, of the fire detection system 300. During the inspection mode, the control circuitry 301 communicates with the at least one processor 107 to obtain information such as historical service information, preset inspection time, and the like. The control circuitry 301 may be programmed to transmit the input signal when a set of conditions are met or on demand by an operator of the fire detection system 300. For example, the control circuitry 301 may transmit the input signal if the preset inspection time of 1 day/week/month from the most recent inspection has lapsed. Alternatively, the operator may wish to inspect one or more of the smoke detectors 101 and accordingly the control circuitry 301 transmits the input signal to the at least one processor 107. During the inspection mode, the control circuitry 301 may also communicate with the smoke detector controller 110 to obtain additional information related to the smoke detector 101. The additional information related to the smoke detector 101 may include a location of the smoke detector 101, a temperature of the region 304, smoke particulate density of the region 304, etc. In an embodiment according to the disclosure, the control circuitry 301 is integrated as a part of the fire detection system 300 remote from the smoke detector 101. Accordingly, the fire detection system 300 may also comprise a plurality of sensors configured to detect one or more parameters of the region 304. In an embodiment, the sensors may include one or a combination of temperature sensors, air quality sensors, and the like. Alternatively, the sensors may be installed as a part of a building management system. Using these sensors, the control circuitry 301 and/or the smoke detector controller 110 detect information regarding different parameters of the region 304.

In an embodiment, the communications unit 301-3 also transmits data to and receives data from the computing device 303 via a communications network 302. The communications unit 301-3 may include, for example, a telematic transceiver (DCM), a mayday battery, a GPS, a data communication module ASSY, a telephone microphone ASSY, and a telephone antenna ASSY. The communications network 302 may include, but is not limited to, a Wide Area Network (WAN), a cellular network, such as a 3G, 4G, or 5G network, an Internet-based mobile ad hoc networks (IMANET), etc. The communications network 302 may also include wired media such as a wired network, a direct-wired connection, and wireless media such as acoustic, radio frequency (RF), microwave, infrared (IR), and other wireless media. In an embodiment, the computing device 303 may be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. In an embodiment, the control circuitry 301 is further configured to generate a secondary notification on at least one of a computing device 303 based on the control circuitry 301 verifying the operational integrity of the smoke detector 101.

The computing device 303 may also be implemented as a personal computer including both laptop computer and non-laptop computer configurations. The computing device 303 can also be any type of network computing device. The computing device 303 can also be an automated system as described herein. The computing device 303 may have additional features or functionality, and additional interfaces to facilitate communications between basic configuration and any devices and interfaces. For example, a bus/interface controller may be used to facilitate communications between a basic configuration and one or more data storage devices via a storage interface bus. Data storage devices may be removable storage devices, non-removable storage devices, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and non-volatile, removable and non-removable media implemented in any method or technology for storage of information, such as computer readable instructions, data structures, program modules, or other data systems can also be used for data analysis and to determine when (e.g., acceleration and/or speed).

In an embodiment, the notification unit 109 may include a sound generation mechanism connected to the smoke detector controller 110. The notification unit 109 may be operable to receive power from the smoke detector controller 110 to generate a noise in response to detection of the threshold level of the ambient particulate materials being breached. The control circuitry 301 is further configured to generate a secondary notification on the computing device 303 based on the control circuitry 301 verifying the operational integrity of the smoke detector 101. For example, if the selected smoke detector 101 has been verified as being operational and without any malfunctioning components, the communications unit 301-3 of the control circuitry 301 generates a trigger signal which is conveyed to an interface or the communications unit 301-3 of the computing device 303. When the computing device 303 receives the trigger signal, the computing device 303 generates a notification such as an audio notification, a visual notification, an audio-visual notification, and a haptic notification. The audio notification may include a loud warning siren or alarm which may be generated for a continuous or periodic interval of time. The audio notification may be configured to be switched off based on an input received via the computing device 303, after which the computing device 303 resumes to a normal indication without the audio notification. The input may include an input received via a haptic interface of the computing device 303, an ON/OFF switch, biometric/RFID authentication by authorized security, or safety personnel, etc. This means the audio notification continuously provides the alert to the operator of the computing device 303 until the operator shuts off the notification. In some exemplary implementations, the computing device 303 generates a visual notification in addition to the audio notification via a display interface of the computing device 303.

**The** display may comprise suitable logic, circuitry, interfaces, and/or code that may be configured to render various types of information and/or entertainment content via a user interface. In an embodiment, the display may be a flashing visual indicator, such as a Light Emitting Diode (LED), indicator lights, or the like. The user interface may be a customized Graphic User Interface (GUI) configured to display information related to the fire detection system 300 such as the threshold level set by the operator, a location of the smoke detector 101, a number of damaged smoke detector 101 in an area, etc. The display may include, but is not limited to, a projection-based display, an electro-chromic display, a flexible display, and/or holographic display. In other embodiments, the display may be a touchscreen display, a tactile electronic display, and/or a touchable hologram. As such, the display may be configured to receive inputs from the operator for setting or modifying the threshold level, the predefined intervals, etc.

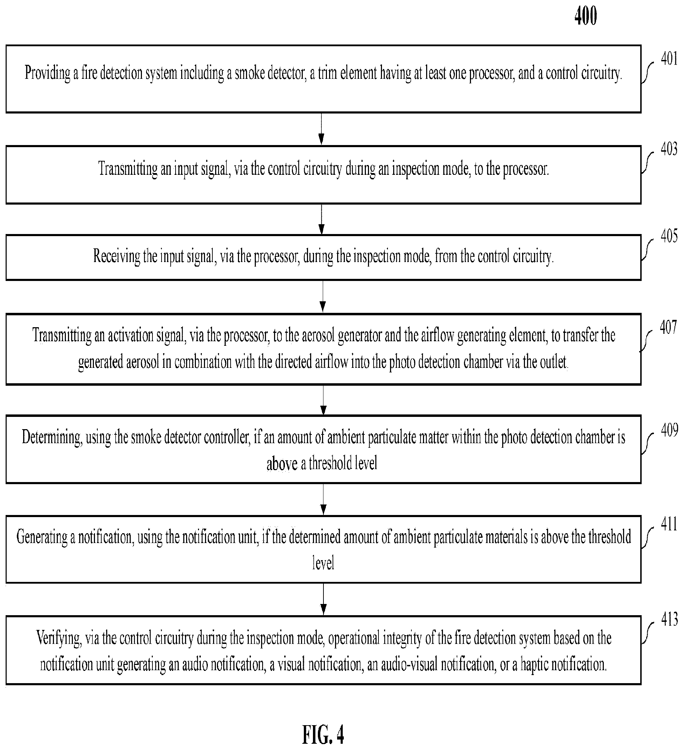

**FIG. 4** exemplarily illustrates a flowchart indicating a method 400 for verifying the operational integrity of the fire detection system 300. For the sake of brevity, details of the present disclosure that are explained in the description of **FIGS. 1-3** are not explained in the description of **FIG. 4****.**

The method 400, disclosed herein, for verifying the operational integrity of the fire detection system 300 includes, at Step 401, providing the fire detection system 300 including the at least one smoke detector 101, the trim element 100, and the control circuitry 301. The at least one smoke detector 101 includes the housing 101c defining the photo detection chamber 101b for receiving ambient particulate materials as shown in **FIGS. 1-2B****.** The trim element 100 aesthetically covers the base portion 101a of the at least one smoke detector 101. The trim element 100 includes the hollow housing 102 having the inner wall 102a adapted to removably attach the hollow housing 102 to the base portion 101a of the at least one smoke detector 101 as shown in FIG. 2A. The hollow housing 102 defines the at least one aerosolizing chamber 103 and the at least one outlet 104 in fluid communication with the at least one aerosolizing chamber 103. The at least one aerosolizing chamber 103 includes the at least one aerosol generator 105, the at least one airflow generating element 106, and the at least one processor 107.

**At** Step 403, the control circuitry 301 transmits the input signal, during the inspection mode, to the at least one processor 107.

**At** Step 405, the at least one processor 107 receives the input signal, during the inspection mode, from the control circuitry 301.

**At** Step 407, the at least one processor 107 transmits the activation signal, to the at least one aerosol generator 105 to generate aerosol and the at least one airflow generating element 106 to transfer the generated aerosol in combination with the directed airflow into the photo detection chamber 101b via the at least one outlet 104.

**At** Step 409, the smoke detector controller 110 determines if an amount of ambient particulate matter within the photo detection chamber 101b is above a threshold level.

**At** Step 411, the notification unit 109 generates a notification if the determined amount of ambient particulate materials is above the threshold level.

**At** Step 413, the control circuitry 301 verifies, during the inspection mode, operational integrity of the fire detection system 300 based on the notification unit 109 generating at least one of an audio notification, a visual notification, an audio-visual notification, and a haptic notification.

**As** shown and described earlier in the detailed descriptions of **FIGS. 1-4****,** the trim element 100 performs the dual function of aesthetically covering the base portion 101a of the at least one smoke detector 101 and housing the aerosol generator 105. In an embodiment, the trim element 100 is the frustoconical-shaped hollow ring that slopes from the base portion 101a of the at least one smoke detector 101 towards the ceiling. The provision of the at least one flow directing element 108, designed as an inclined airflow scoop directed towards the photo detection chamber 101b ensures that the generated aerosol fully enters the photo detection chamber 101b. Advantageously, the inclined positioning of the flow directing element 108 ensures that the generated aerosol follows a path taken by smoke in the event of a fire thereby improving real world simulation and testing of smoke entry as in the case of a fire.

In another embodiment, a plurality of flow directing elements 108 may be spaced apart relative to each other along a peripheral surface 102b of the hollow housing 102 such that each of the plurality of flow directing elements 108 is adapted to define at least one outlet 104. In such an implementation, the at least one processor 107, shown in **FIG. 2A-2B****,** is configured to regulate the speed of the airflow generating element 106 to selectively direct the airflow in combination with the generated aerosol through the least one outlet 104 of the selected flow directing element 108 from among the plurality of flow directing elements 108. For example, when the speed is increased, the throw or the distance through which the airflow passes is substantially increased. This means, the generated aerosol and the generated airflow travel further away from the airflow generating element 106 and reach the smoke detector 101 through the outlet 104 of the flow directing element 108 further away from the airflow generating element 106. Advantageously, as a result, multiple entry points of the smoke detector 101 can be tested during the inspection mode. Moreover, by reducing the speed of the airflow generating element 106, the density of the particulate matter in the generated aerosol can be increased thereby enabling testing of the smoke detector 101 under different conditions.

**As** would be apparent to a person in the art, various working modifications may be made to the method in order to implement the inventive concept as taught herein.

Moreover, the actions of any flow diagram need not be implemented in the order shown; nor do all the acts necessarily need to be performed. Also, those acts that are not dependent on other acts may be performed in parallel with the other acts.

**The** drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

## Claims

1. A trim element (100) for covering a base portion (101a) of a smoke detector (101), the trim element comprising:
at least one aerosolizing chamber (103); and
a hollow housing (102) comprising an inner wall (102a) adapted to removably attach the hollow housing to the base portion of the smoke detector, the hollow housing defining the at least one aerosolizing chamber (103) and at least one outlet (104) in fluid communication with the at least one aerosolizing chamber,
wherein the at least one aerosolizing chamber comprises:
at least one aerosol generator (105) to generate an aerosol;
at least one airflow generating element (106) configured to generate and to direct airflow in combination with the generated aerosol towards the at least one outlet; and
at least one processor (107) electrically coupled to the at least one aerosol generator and the at least one airflow generating element, the at least one processor configured to:
receive an input signal indicative of an inspection mode of the smoke detector; and
transmit an activation signal to the at least one aerosol generator and to the at least one airflow generating element in response to receiving the input signal.

2. The trim element (100) according to claim 1, wherein the hollow housing (102) is a frustoconical-shaped ring comprising the at least one outlet (104) proximal the inner wall (102a), wherein the at least one outlet is directed towards the smoke detector.

3. The trim element (100) according to claim 1 or 2, comprising at least one flow directing element (108) adapted to define the at least one outlet at a first end, wherein the at least one flow directing element is in fluid communication with the at least one aerosolizing chamber at a second end;
optionally, wherein the at least one flow directing element is an airflow scoop.

4. The trim element (100) according to any preceding claim, comprising a flow directing element (108) on a peripheral surface (102b) of the hollow housing (102), wherein the flow directing element is adapted to define at least one outlet (104);
optionally, wherein the at least one processor (107) is configured to regulate a speed of the airflow generating element (106) to selectively direct the airflow in combination with the generated aerosol through the at least one outlet of the flow directing element.

5. The trim element (100) according to any one of the preceding claims, wherein the at least one aerosol generator (105) comprises:
a liquid storage chamber for storing a liquid; and
an actuator operably engaged with the liquid storage chamber and adapted to aerosolize the liquid to form an aerosol;
optionally wherein the liquid is one of an aerosol forming liquid and a liquid containing dissolved salts.

6. The trim element (100) according to any of the preceding claims, wherein the smoke detector (101) comprises at least one of a heat sensor, a Carbon monoxide sensor, and a gas sensor for detecting at least one of an ambient temperature, a presence of a carbon monoxide gas, and a presence of a hazardous gas respectively, wherein the hazardous gas is at least one of an oxide of Carbon, an oxide of Sulphur, an oxide of Nitrogen, a Polycyclic Aromatic Hydrocarbon, and an aldehyde.

7. A fire detection system (300) comprising:
at least one smoke detector (101) comprising:
a housing (101c) defining a photo detection chamber (101b) for receiving ambient particulate materials; and
a trim element (100) as claimed in any preceding claim, for covering a base portion (101a) of the at least one smoke detector.

8. The fire detection system (300) according to claim 7, wherein the at least one outlet (104) is directed towards the photo detection chamber (101b) and wherein the at least one outlet is adapted to transfer the generated aerosol into the photo detection chamber.

9. The fire detection system (300) according to claim 7 or 8, comprising a control circuitry (301) configured to transmit the input signal, during the inspection mode, to the at least one processor (107).

10. The fire detection system (300) according to any of claims 7 to 9, wherein the at least one smoke detector (101) comprises:
a notification unit (109); and
a smoke detector controller (110) configured to:
determine if an amount of ambient particulate materials within the photo detection chamber (101b) is above a threshold level; and
generate a notification using the notification unit if the determined amount of ambient particulate materials is above the threshold level;
optionally, wherein the notification is one of an audio notification, a visual notification, an audio-visual notification, and a haptic notification.

11. The fire detection system (300) according to any of claims 7 to 10, wherein the inspection mode is triggered based on the control circuitry (301) receiving an input; or wherein the inspection mode is triggered periodically at predefined intervals.

12. The fire detection system (300) according to any of claims 7 to 11, wherein the control circuitry (301) is configured to verify operational integrity of the at least one smoke detector (101) based on the notification unit (109) generating the notification when the aerosol enters the photo detection chamber (101b) during the inspection mode.

13. The fire detection system (300) according to any of claims 7 to 12, wherein the control circuitry (301) is configured to generate a secondary notification on at least one computing device (303) based on the control circuitry verifying operational integrity of the at least one smoke detector (101).

14. A method (400) for verifying operational integrity of a fire detection system (300) comprising:
providing (401) the fire detection system comprising:
at least one smoke detector (101); and
a trim element (100) for covering a base portion (101a) of the at least one smoke detector, wherein the trim element comprises at least one processor (107);
transmitting (403) an input signal, via a control circuitry (301) during an inspection mode, to the at least one processor;
receiving (405) the input signal, via the at least one processor, during the inspection mode, from the control circuitry;
transmitting (407) an activation signal, via the at least one processor, to at least one aerosol generator (105) to generate aerosol and to at least one airflow generating element (106) to generate airflow and transfer the generated aerosol in combination with the generated airflow into a photo detection chamber (101b) via at least one outlet (104);
determining (409), using a smoke detector controller (110), if an amount of ambient particulate matter within the photo detection chamber is above a threshold level;
generating (411) a notification, using a notification unit (109), if the determined amount of ambient particulate matter is above the threshold level; and
verifying (413), via the control circuitry during the inspection mode, operational integrity of the fire detection system based on the notification unit generating at least one of an audio notification, a visual notification, an audio-visual notification, and a haptic notification.

15. The method (400) according to claim 14, wherein the control circuitry (301) is further configured to generate a secondary notification on at least one computing device based on the control circuitry verifying operational integrity of the at least one smoke detector, wherein the secondary notification is one of an audio notification, a visual notification, an audio-visual notification, and a haptic notification.

## Patentansprüche

1. Verkleidungselement (100) zum Abdecken eines Basisabschnitts (101a) eines Rauchmelders (101), das Verkleidungselement umfassend:
mindestens eine Aerosolisierungskammer (103); und
ein hohles Gehäuse (102), das eine Innenwand (102a) umfasst, die angepasst ist, um das hohle Gehäuse abnehmbar am Basisabschnitt des Rauchmelders zu befestigen, wobei das hohle Gehäuse mindestens eine Aerosolisierungskammer (103) und mindestens einen Auslass (104) definiert, der in Fluidverbindung mit der mindestens einen Aerosolisierungskammer steht,
wobei die mindestens eine Aerosolisierungskammer umfasst:
mindestens einen Aerosolerzeuger (105) zum Erzeugen eines Aerosols;
mindestens ein Luftstromerzeugungselement (106), das ausgebildet ist, um Luftstrom zu erzeugen und diesen in Kombination mit dem erzeugten Aerosol auf mindestens einen Auslass zu richten; und
mindestens einen Prozessor (107), der elektrisch mit mindestens einem Aerosolerzeuger und mindestens einem Luftstromerzeugungselement gekoppelt ist, wobei der mindestens eine Prozessor zu Folgendem ausgebildet ist:
Empfangen eines Eingabesignals, das auf einen Inspektionsmodus des Rauchmelders hinweist; und
Übertragen eines Aktivierungssignals an mindestens einen Aerosolerzeuger und an mindestens ein Luftstromerzeugungselement als Reaktion auf das Empfangen des Eingabesignals.

2. Verkleidungselement (100) nach Anspruch 1, wobei das hohle Gehäuse (102) ein kegelstumpfförmiger Ring ist, der den mindestens einen Auslass (104) in der Nähe der Innenwand (102a) umfasst, wobei der mindestens eine Auslass zum Rauchmelder hin gerichtet ist.

3. Verkleidungselement (100) nach Anspruch 1 oder 2, umfassend mindestens ein Strömungslenkelement (108), das angepasst ist, um den mindestens einen Auslass an einem ersten Ende zu definieren, wobei das mindestens eine Strömungslenkelement an einem zweiten Ende in Fluidverbindung mit der mindestens einen Aerosolisierungskammer steht;
wahlweise, wobei das mindestens eine Strömungslenkelement eine Luftleitschaufel ist.

4. Verkleidungselement (100) nach einem vorstehenden Anspruch, umfassend ein Strömungslenkelement (108) auf einer Umfangsfläche (102b) des hohlen Gehäuses (102), wobei das Strömungslenkelement angepasst ist, um mindestens einen Auslass (104) zu definieren;
wahlweise, wobei der mindestens eine Prozessor (107) ausgebildet ist, um die Geschwindigkeit des Luftstromerzeugungselements (106) zu regulieren, um den Luftstrom in Kombination mit dem erzeugten Aerosol selektiv durch den mindestens einen Auslass des Strömungslenkelements zu leiten.

5. Verkleidungselement (100) nach einem der vorstehenden Ansprüche, wobei der mindestens eine Aerosolerzeuger (105) umfasst:
eine Flüssigkeitsaufbewahrungskammer zum Aufbewahren einer Flüssigkeit; und
ein Stellglied, das betriebsfähig mit der Flüssigkeitsaufbewahrungskammer in Eingriff steht, und das angepasst ist, um die Flüssigkeit zu vernebeln, um ein Aerosol zu bilden;
wahlweise, wobei die Flüssigkeit eine von einer Aerosol bildenden Flüssigkeit und einer Flüssigkeit, die gelöste Salze enthält, ist.

6. Verkleidungselement (100) nach einem der vorstehenden Ansprüche, wobei der Rauchmelder (101) mindestens einen von einem Temperatursensor, einem Kohlenmonoxidsensor und einem Gassensor umfasst, um jeweils mindestens eine von einer Umgebungstemperatur, einer Anwesenheit von Kohlenmonoxidgas und einer Anwesenheit eines gefährlichen Gases zu erkennen, wobei das gefährliche Gas mindestens eines der folgenden ist: ein Kohlenstoffoxid, ein Schwefeloxid, ein Stickstoffoxid, ein polyzyklisches aromatisches Kohlenwasserstoff und ein Aldehyd.

7. Brandmeldesystem (300), umfassend:
mindestens einen Rauchmelder (101), umfassend:
ein Gehäuse (101c), das eine Fotodetektionskammer (101b) zur Aufnahme von Umgebungspartikelmaterial bildet; und
ein Verkleidungselement (100) nach einem vorhergehenden Anspruch, zum Abdecken eines Basisabschnitts (101a) des mindestens einen Rauchmelders.

8. Brandmeldesystem (300) nach Anspruch 7, wobei der mindestens eine Auslass (104) auf die Fotodetektionskammer (101b) gerichtet ist und wobei der mindestens eine Auslass angepasst ist, das erzeugte Aerosol in die Fotodetektionskammer zu übertragen.

9. Brandmeldesystem (300) nach Anspruch 7 oder 8, umfassend eine Steuerschaltung (301), die zum Übertragen des Eingabesignals, während des Inspektionsmodus, an mindestens einen Prozessor (107) ausgebildet ist.

10. Brandmeldesystem (300) nach einem der Ansprüche 7 bis 9, wobei der mindestens eine Rauchmelder (101) umfasst:
eine Benachrichtigungseinheit (109); und
eine Rauchmelder-Steuereinheit (110), ausgebildet zum:
Bestimmen, ob eine Menge an Umgebungspartikelmaterial innerhalb der Fotodetektionskammer (101b) einen Schwellenwert überschreitet; und
Erzeugen einer Benachrichtigung unter Verwendung der Benachrichtigungseinheit, wenn die bestimmte Menge an Umgebungspartikelmaterial über dem Schwellenwert liegt;
wahlweise, wobei die Benachrichtigung eine von einer akustischen Benachrichtigung, einer visuellen Benachrichtigung, einer audiovisuellen Benachrichtigung oder einer haptischen Benachrichtigung ist.

11. Brandmeldesystem (300) nach einem der Ansprüche 7 bis 10, wobei der Inspektionsmodus auf der Grundlage der Steuerschaltung (301) ausgelöst wird, die eine Eingabe empfängt; oder wobei der Inspektionsmodus periodisch in vordefinierten Intervallen ausgelöst wird.

12. Brandmeldesystem (300) nach einem der Ansprüche 7 bis 11, wobei die Steuerschaltung (301) ausgebildet ist, um die Betriebsintegrität des mindestens einen Rauchmelders (101) auf der Grundlage der Benachrichtigungseinheit (109), die die Benachrichtigung erzeugt, wenn das Aerosol während des Inspektionsmodus in die Fotodetektionskammer (101b) eintritt, zu überprüfen.

13. Brandmeldesystem (300) nach einem der Ansprüche 7 bis 12, wobei die Steuerschaltung (301) ausgebildet ist, um eine sekundäre Benachrichtigung auf mindestens einer Rechenvorrichtung (303) auf der Grundlage der Überprüfung der Betriebsintegrität des mindestens einen Rauchmelders (101) durch die Steuerschaltung zu erzeugen.

14. Verfahren (400) zur Überprüfung der Betriebsintegrität eines Brandmeldesystems (300), umfassend:
Bereitstellen (401) des Brandmeldesystems, umfassend:
mindestens einen Rauchmelder (101); und
ein Verkleidungselement (100) zum Abdecken eines Basisabschnitts (101a) des mindestens einen Rauchmelders, wobei das Verkleidungselement mindestens einen Prozessor (107) umfasst;
Übertragen (403) eines Eingabesignals über eine Steuerschaltung (301) während eines Inspektionsmodus an mindestens einen Prozessor;
Empfangen (405) des Eingabesignals über mindestens einen Prozessor während des Inspektionsmodus von der Steuerschaltung;
Übertragen (407) eines Aktivierungssignals über mindestens einen Prozessor an mindestens einen Aerosolerzeuger (105) zum Erzeugen von Aerosol und an mindestens ein Luftstromerzeugungselement (106) zum Erzeugen eines Luftstroms und Übertragen des erzeugten Aerosols in Kombination mit dem erzeugten Luftstrom in eine Fotodetektionskammer (101b) über mindestens einen Auslass (104);
Bestimmen (409), unter Verwendung einer Rauchmelder-Steuereinheit (110), ob eine Menge an Umgebungspartikelmaterial innerhalb der Fotodetektionskammer einen Schwellenwert überschreitet;
Erzeugen (411) einer Benachrichtigung unter Verwendung einer Benachrichtigungseinheit (109), wenn die bestimmte Menge an Umgebungspartikelmaterial über dem Schwellenwert liegt; und
Überprüfen (413) der betrieblichen Integrität des Brandmeldesystems über die Steuerschaltung während des Inspektionsmodus auf der Grundlage, dass die Benachrichtigungseinheit mindestens eine von einer akustischen Benachrichtigung, einer visuellen Benachrichtigung, einer audiovisuellen Benachrichtigung und einer haptischen Benachrichtigung erzeugt.

15. Verfahren (400) nach Anspruch 14, wobei die Steuerschaltung (301) weiter ausgebildet ist, um eine sekundäre Benachrichtigung auf mindestens einer Rechenvorrichtung auf der Grundlage der Überprüfung der Betriebsintegrität des mindestens einen Rauchmelders zu erzeugen, wobei die sekundäre Benachrichtigung eine von einer akustischen Benachrichtigung, einer visuellen Benachrichtigung, einer audiovisuellen Benachrichtigung und einer haptischen Benachrichtigung ist.

## Revendications

1. Élément d'habillage (100) pour recouvrir une portion de base (101a) d'un détecteur de fumée (101), l'élément d'habillage comprenant :
au moins une chambre d'aérosolisation (103) ; et
un boîtier creux (102) comprenant une paroi interne (102a) adaptée pour fixer de manière amovible le boîtier creux à la portion de base du détecteur de fumée, le boîtier creux définissant l'au moins une chambre d'aérosolisation (103) et au moins une sortie (104) en communication fluide avec l'au moins une chambre d'aérosolisation,
dans lequel l'au moins une chambre d'aérosolisation comprend :
au moins un générateur d'aérosol (105) pour générer un aérosol ;
au moins un élément générateur de flux d'air (106) configuré pour générer et diriger un flux d'air en combinaison avec l'aérosol généré vers l'au moins une sortie ; et
au moins un processeur (107) couplé électriquement à l'au moins un générateur d'aérosol et à l'au moins un élément générateur de flux d'air, l'au moins un processeur étant configuré pour :
recevoir un signal d'entrée indiquant un mode d'inspection du détecteur de fumée ; et
transmettre un signal d'activation à l'au moins un générateur d'aérosol et à l'au moins un élément générateur de flux d'air en réponse à la réception du signal d'entrée.

2. Élément d'habillage (100) selon la revendication 1, dans lequel le boîtier creux (102) est un anneau de forme tronconique comprenant l'au moins une sortie (104) proximale à la paroi interne (102a), dans lequel l'au moins une sortie est dirigée vers le détecteur de fumée.

3. Élément d'habillage (100) selon la revendication 1 ou la revendication 2, comprenant au moins un élément (108) de direction d'écoulement adapté pour définir l'au moins une sortie à une première extrémité, dans lequel l'au moins un élément de direction d'écoulement est en communication fluide avec l'au moins une chambre d'aérosolisation à une seconde extrémité ;
facultativement, dans lequel l'au moins un élément de direction d'écoulement est une écope à flux d'air.

4. Élément d'habillage (100) selon une quelconque revendication précédente, comprenant un élément (108) de direction d'écoulement sur une surface périphérique (102b) du boîtier creux (102), dans lequel l'élément de direction d'écoulement est adapté pour définir au moins une sortie (104) ;
facultativement, dans lequel l'au moins un processeur (107) est configuré pour réguler une vitesse de l'élément de génération de flux d'air (106) pour diriger sélectivement le flux d'air en combinaison avec l'aérosol généré à travers l'au moins une sortie de l'élément de direction d'écoulement.

5. Élément d'habillage (100) selon l'une quelconque des revendications précédentes, dans lequel l'au moins un générateur d'aérosol (105) comprend :
une chambre de stockage de liquide pour stocker un liquide ; et
un actionneur venant en prise fonctionnellement avec la chambre de stockage de liquide et adapté pour aérosoliser le liquide pour former un aérosol ;
facultativement dans lequel le liquide est l'un parmi un liquide de formage d'aérosol et un liquide contenant des sels dissous.

6. Élément d'habillage (100) selon l'une quelconque des revendications précédentes, dans lequel le détecteur de fumée (101) comprend au moins l'un parmi un capteur de chaleur, un capteur de monoxyde de carbone et un capteur de gaz pour détecter au moins l'une parmi une température ambiante, une présence d'un gaz de monoxyde de carbone, et une présence d'un gaz dangereux respectivement, dans lequel le gaz dangereux est au moins l'un parmi un oxyde de carbone, un oxyde de soufre, un oxyde d'azote, un hydrocarbure aromatique polycyclique et un aldéhyde.

7. Système de détection d'incendie (300), comprenant :
au moins un détecteur de fumée (101) comprenant :
un boîtier (101c) définissant une chambre de photodétection (101b) pour recevoir des matières particulaires ambiantes ; et
un élément d'habillage (100) selon une quelconque revendication précédente, pour recouvrir une portion de base (101a) de l'au moins un détecteur de fumée.

8. Système de détection d'incendie (300) selon la revendication 7, dans lequel l'au moins une sortie (104) est dirigée vers la chambre de photodétection (101b) et dans lequel l'au moins une sortie est adaptée pour transférer l'aérosol généré dans la chambre de photodétection.

9. Système de détection d'incendie (300) selon la revendication 7 ou la revendication 8, comprenant une circuiterie de commande (301) configurée pour transmettre le signal d'entrée, pendant le mode d'inspection, à l'au moins un processeur (107).

10. Système de détection d'incendie (300) selon l'une quelconque des revendications 7 à 9, dans lequel l'au moins un détecteur de fumée (101) comprend :
une unité de notification (109) ; et
un dispositif de commande de détecteur de fumée (110) configuré pour :
déterminer si une quantité de matières particulaires ambiantes à l'intérieur de la chambre de photodétection (101b) est supérieure à un niveau seuil ; et
générer une notification en utilisant l'unité de notification si la quantité déterminée de matières particulaires ambiantes est supérieure au niveau seuil ;
facultativement, dans lequel la notification est l'une parmi une notification audio, une notification visuelle, une notification audiovisuelle et une notification haptique.

11. Système de détection d'incendie (300) selon l'une quelconque des revendications 7 à 10, dans lequel le mode d'inspection est déclenché sur la base de la circuiterie de commande (301) recevant une entrée ;
ou dans lequel le mode d'inspection est déclenché périodiquement à des intervalles prédéfinis.

12. Système de détection d'incendie (300) selon l'une quelconque des revendications 7 à 11, dans lequel la circuiterie de commande (301) est configurée pour vérifier l'intégrité opérationnelle de l'au moins un détecteur de fumée (101) sur la base de l'unité de notification (109) générant la notification lorsque l'aérosol entre dans la chambre de photodétection (101b) pendant le mode d'inspection.

13. Système de détection d'incendie (300) selon l'une quelconque des revendications 7 à 12, dans lequel la circuiterie de commande (301) est configurée pour générer une notification secondaire sur au moins un dispositif informatique (303) sur la base de la circuiterie de commande vérifiant l'intégrité opérationnelle de l'au moins un détecteur de fumée (101).

14. Procédé (400) de vérification de l'intégrité opérationnelle d'un système de détection d'incendie (300) comprenant :
la fourniture (401) du système de détection d'incendie comprenant :
au moins un détecteur de fumée (101) ; et
un élément d'habillage (100) pour recouvrir une portion de base (101a) de l'au moins un détecteur de fumée, dans lequel l'élément d'habillage comprend au moins un processeur (107) ;
la transmission (403) d'un signal d'entrée, via une circuiterie de commande (301) pendant un mode d'inspection, à l'au moins un processeur ;
la réception (405) du signal d'entrée, via l'au moins un processeur, pendant le mode d'inspection, à partir de la circuiterie de commande ;
la transmission (407) d'un signal d'activation, via l'au moins un processeur, à au moins un générateur d'aérosol (105) pour générer un aérosol et à au moins un élément générateur de flux d'air (106) pour générer un flux d'air et transférer l'aérosol généré en combinaison avec le flux d'air généré dans une chambre de photodétection (101b) via au moins une sortie (104) ;
la détermination (409), en utilisant un dispositif de commande de détecteur de fumée (110), de savoir si une quantité de matière particulaire ambiante à l'intérieur de la chambre de photodétection est supérieure à un niveau seuil ;
la génération (411) d'une notification, en utilisant une unité de notification (109), si la quantité déterminée de matière particulaire ambiante est supérieure au niveau seuil ; et
la vérification (413), via la circuiterie de commande pendant le mode d'inspection, de l'intégrité opérationnelle du système de détection d'incendie sur la base de l'unité de notification générant au moins l'une parmi une notification audio, une notification visuelle, une notification audiovisuelle et une notification haptique.

15. Procédé (400) selon la revendication 14, dans lequel la circuiterie de commande (301) est en outre configurée pour générer une notification secondaire sur au moins un dispositif informatique sur la base de la circuiterie de commande vérifiant l'intégrité opérationnelle de l'au moins un détecteur de fumée, dans lequel la notification secondaire est l'une parmi une notification audio, une notification visuelle, une notification audiovisuelle et une notification haptique.
